Europäisches Patentamt

European Patent Office

Office européen des brevets

(11) Veröffentlichungsnummer: **0 444 520 A2**

## EUROPÄISCHE PATENTANMELDUNG

(21) Anmeldenummer: 91102489.1

(22) Anmeldetag: 21.02.91

(51) Int. Cl.⁵: **B60S 1/08**

(30) Priorität: 28.02.90 DE 4006174

(43) Veröffentlichungstag der Anmeldung:
04.09.91 Patentblatt 91/36

(84) Benannte Vertragsstaaten:
**ES FR GB IT SE**

(71) Anmelder: **Leopold Kostal GmbH & Co. KG**
**Wiesenstrasse 47**
**W-5880 Lüdenscheid(DE)**

(72) Erfinder: **Wiegleb, Gerhard**
**Spielbergweg 69**
**W-5974 Herscheid(DE)**
Erfinder: **Bendicks, Norbert**
**Caller Strasse 73**
**W-5870 Hemer(DE)**

(54) **Sensoreinrichtung.**

㊲ Es wird eine Sensoreinrichtung zur Erfassung des Benetzungsgrades einer insbesondere aus Glas bestehenden transparenten Scheibe mit tropfenförmigem Niederschlag vorgeschlagen, die mit einem an die Scheibe angekoppelten Strahlenleitkörper versehen ist, dem einerseits ein Strahlensender und andererseits ein Strahlenempfänger zugeordnet ist und der zwecks Mehrfachreflexion der vom Strahlensender emittierten Strahlen ein Reflexionsmittel aufweist.
Bei einer solchen Sensoreinrichtung soll das technische Problem gelöst werden, eine Beeinträchtigung des vom Strahlenempfänger gelieferten, in Abhängigkeit von der Niederschlagsmenge stehenden Signals durch Luftfeuchtigkeit auch bei relativ großen Temperaturunterschieden mit Sicherheit zu verhindern. Dies wird dadurch erreicht, daß das Reflexionsmittel aus einer mit einer parallel zur Scheibe verlaufenden Oberfläche des Strahlenleitkörpers innig verbundenen, vorzugsweise eine hochglänzende Oberfläche aufweisenden, sehr dünnen Materialschicht besteht.

Fig.1a

EP 0 444 520 A2

Die vorliegende Erfindung geht von einer gemäß dem Oberbegriff des Hauptanspruches konzipierten, zur Erfassung des Benetzungsgrades einer Glasscheibe mit tropfenförmigem Niederschlag vorgesehenen Sensoreinrichtung aus.

Derartige Einrichtungen sind insbesondere dafür vorgesehen, um die auf der Front- oder der Heckscheibe eines Kraftfahrzeuges sich pro Zeiteinheit niederschlagende Feuchtigkeit mengenmäßig in repräsentativer Form zu erfassen und in Abhängigkeit davon ein der Glasscheibe zugeordnetes Scheibenwischsystem automatisch zu beeinflussen.

Durch die DE 33 14 770 C1 ist eine Einrichtung zum Steuern eines Scheibenwischermotors bekanntgeworden, bei der ein Strahlenleitkörper mittels optischen Kitt an eine Scheibe angekoppelt wird und bei der dem Strahlenleitkörper über Strahlenlinsen ein Strahlensender und ein Strahlenempfänger zugeordnet sind. Der Strahlensender und der Strahlenempfänger sind dabei so angeordnet, daß das aus dem Strahlenaustrittselement des Strahlensenders austretende Strahlenbündel gegenüber dem in das Strahleneintrittselement des Strahlenempfängers eintretende Strahlenbündel um etwa 90° versetzt ist, und zwar in dem dem Strahlenleitkörper zugeordneten Bereich des Strahlenein- bzw. -austritts. Zur Erzielung einer Mehrfachreflexion der Strahlen ist in dem zwischen den beiden Strahlenlinsen liegenden Bereich ein Reflexionsmittel vorgesehen, das aus einem Flächenanteil der dem Strahlenleitkörper zugewandten Oberfläche der Glasscheibe und aus einem demselben zugeordneten Luftraum gebildet ist. Bei einer solchen Ausführungsform besteht jedoch das Problem, daß infolge der an einer dem Niederschlag ausgesetzten Glasscheibe zwangsläufig auftretenden Temperaturunterschiede sich auf dem für die Reflexion der Strahlen vorgesehenen Flächenanteil der Glasscheibe Kondensat aus dem zugeordneten Luftraum abschlägt, wodurch die Reflexionseigenschaften verändert werden. Aufgrund dessen erfährt die vom Strahlenempfänger detektierte Strahlenintensität eine Verfälschung, wodurch sich auch das von dem Strahlenempfänger gelieferte Signal verändert und damit das nachgeschaltete Aggregat - wie z.B. das Scheibenwischsystem eines Kraftfahrzeuges in einer nicht korrekten Weise beeinflußt.

Darüberhinaus ist durch die DE 38 23 300 C1 eine Sensoreinrichtung bekanntgeworden, bei der das für eine Mehrfachreflexion vorgesehene Reflexionsmittel aus einem sich parallel zur Glasscheibe erstreckenden, in das Basisteil des Strahlenleitkörpers eingebrachten Reflexionsblech besteht. Bei einem derartigen Aufbau einer Sensoreinrichtung kann es infolge von recht beachtlichen, bei einem Kraftfahrzeug in der Größenordnung von ca. 130 K

(-40°C bis +90°C) liegenden Temperaturunterschieden zu Mikrorissen des Strahlenleitkörpers kommen, und zwar aufgrund der unterschiedlichen Ausdehnungskoeffizienten des aus Glas, Plexiglas oder dergleichen hergestellten Strahlenleitkörpers und des relativ dick auszuführenden, insbesondere aus Aluminium bestehenden Reflexionsbleches. Solche Mikrorisse können den Strahlenverlauf wesentlich beeinflussen und bis zum vollkommenen Funktionsausfall der Sensoreinrichtung führen. Um diesem Effekt entgegenzuwirken, müßte das Reflexionsblech wesentlich dünner gestaltet werden. Einem derartigen Vorgehen sind aber Grenzen gesetzt und zwar dadurch, daß das Reflexionsblech in dem für die Formgebung des Strahlenleitkörpers vorgesehenen Werkzeug definiert gehalten werden muß und sich beim Einbringen des den Strahlenleitkörper bildenden Materials nicht verwerfen darf.

Der vorliegenden Erfindung liegt deshalb die Aufgabe zugrunde, eine Sensoreinrichtung der eingangs erwähnten Art derart weiterzubilden, daß eine optimale Funktionsfähigkeit auch bei relativ großen Temperaturunterschieden durch einwandfreie Zuordnung eines relativ einfach herzustellenden und ohne großen Aufwand anzuordnenden Reflexionsmittels gewährleistet ist.

Erfindungsgemäß wird die Aufgabe durch die im kennzeichnenden Teil des Hauptanspruches angegebenen Merkmale gelöst. Vorteilhaft bei einer derartigen Ausgestaltung einer Sensoreinrichtung ist, daß durch die Anbringung einer sehr dünnen und damit Temperaturunterschiede auffangenden, eine Totalreflexion gewährleistenden Materialschicht es zu keiner Beeinflussung des Meßergebnisses durch Feuchtigkeit kommen kann.

Im Zusammenhang mit einer so ausgebildeten Sensoreinrichtung ist es günstig, wenn derselben eine insbesondere auf den Strahlenleitkörper einwirkende Heizvorrichtung zugeordnet wird. Hierdurch wird erreicht, daß die gesamte Sensoreinrichtung innerhalb einer relativ kurzen Zeit auf ein bestimmtes Temperaturniveau, z.B. 40°C, gebracht wird, wodurch einerseits eine Reduktion von Temperaturfehlern und andererseits eine partielle Erwärmung der Glasscheibe erreicht wird. Durch die Aufheizung der Glasscheibe wird ein als Schneeflocken auf der Glasscheibe vorhandener Niederschlag aufgetaut, der damit detektiert werden kann.

Weitere vorteilhafte Ausgestaltungen des erfindungsgemäßen Gegenstandes sind in den Unteransprüchen angegeben und werden anhand eines in der Zeichnung dargestellten Ausführungsbeispieles einer entsprechend aufgebauten Sensoreinrichtung näher erläutert. Dabei zeigen

Fig. 1a   eine Sensoreinrichtung im Schnitt gemäß Linie A-A der Figur 1d

Fig. 1b   die Sensoreinrichtung im Schnitt gemäß Linie B-B der Figur 1d

Fig. 1c    eine als Blockeinheit aufgebaute Sensoreinrichtung im Schnitt gemäß Linie C-C der Figur 1a

Fig. 1d    die als Blockeinheit aufgebaute Sensoreinrichtung nach Figur 1c in Draufsicht

Fig. 2    eine weitere Sensoreinrichtung in entsprechend Linie A-A der Figur 1d geschnittener Ansicht.

Wie aus der Zeichnung hervorgeht, besteht eine zur Erfassung des Benetzungsgrades einer vorzugsweise aus Glas bestehenden Scheibe S mit insbesondere tropfenförmigem Niederschlag vorgesehene Sensoreinrichtung im wesentlichen aus einem einerseits einem Strahlensender 1 und andererseits einem Strahlenempfänger 2 zugeordneten Strahlenleitkörper 3, der mittels optischen Kitt K auf der nicht dem Niederschlag ausgesetzten Oberfläche S' der Scheibe S befestigt wird. Bei der Scheibe S handelt es sich insbesondere um die Windschutzscheibe eines Kraftfahrzeuges, an der die in einem Gehäuse G angeordnete Sensoreinrichtung an exponierter, d.h. die Sicht nicht beeinträchtigender, jedoch für die Erfassung des Niederschlags prädestinierter Stelle vorhanden ist. Der Strahlenleitkörper 3 besteht dabei aus einem prinzipiell trapezförmig ausgebildeten Basisteil 3a, an dessen beiden sich gegenüberliegenden Trapezflächen 3a',3a'' jeweils eine Strahlenlinse 3b',3b'' vorhanden ist. Die beiden gleich groß ausgeführten Trapezflächen 3a',3a'' sind hierbei so am Basisteil 3a angeordnet, daß die Mittellinien der beiden Strahlenlinsen 3b',3b'' um einen Winkel $\alpha$ von 90° gegeneinander versetzt sind. Die Strahlenlinsen können dabei entweder an den Trapezflächen 3a',3a'' z.B. unter Zuhilfenahme von jeweils einem Zentrierstift und optischem Kitt befestigt oder direkt am Basisteil 3a einstückig ausgeformt sein.

An der von der Scheibe S abgewandten Oberfläche 3a* des Basisteils 3a ist zur Ermöglichung einer Mehrfachreflexion der vom Strahlensender 1 emittierten Strahlen eine sehr dünne Materialschicht 4 (in der Zeichnung überdimensional dargestellt) angebracht, die in dem zwischen den beiden Strahlenlinsen 3b',3b'' befindlichen Bereich des Basisteils 3a vorhanden ist und sich parallel zu der Scheibe S erstreckt. Diese zur Ermöglichung von einwandfreien Reflexionen der Strahlen eine vorzugsweise aus Reinstaluminium gebildete, der Scheibe S zugewandte hochglänzende Oberfläche 4' aufweisende Materialschicht 4 steht mit ihrer Oberfläche 4' in dem genannten Bereich vollständig mit dem Strahlenleitkörper 3 in Verbindung, wodurch vermieden ist, daß zwischen der Materialschicht 4 und dem Strahlenleitkörper 3 Luft eindringen und damit Kondensat auf der Oberfläche 3a* bzw. der zugeordneten Oberfläche 4' bilden kann. Die entweder als Metallfolie oder als metallkaschierte Kunststoffolie ausgebildete bzw. in Dünnschichttechnologie direkt auf das Basisteil 3a aufgebrachte Materialschicht 4 kann natürlich - wie in Fig. 2 dargestellt - auch auf der der Scheibe S zugewandten Oberfläche 3a** des Basisteils 3a angebracht werden, wobei dann die hochglänzende Oberfläche 4' der Materialschicht 4 über den optischen Kitt K (in der Zeichnung ebenfalls überdimensional dargestellt) der Scheibe S zugeordnet ist.

In diesem Fall kann dann aufgrund der kürzeren Strahlenwege der Strahlenleitkörper 3 wesentlich kleiner ausgeführt oder ein Einsatz bei einer dickeren Scheibe (wie in Figur 2 dargestellt) vorgenommen werden.

Im Zusammenhang mit einer so ausgebildeten Sensoreinrichtung ist es sehr vorteilhaft, wenn derselben eine insbesondere auf den Strahlenleitkörper einwirkende, der Einfachheit halber nicht dargestellte, z.B. aus einem PTC-Widerstand bestehende Heizvorrichtung zugeordnet wird.

Das an der Scheibe S durch den optischen Kitt K befestigte Basisteil 3a des Strahlenleitkörpers 3 steht über Haltemittel mit dem aus einem Gehäuseunterteil G1 und einem Gehäuseoberteil G2 bestehenden, vorzugsweise aus Kunststoff hergestellten Gehäuse G in Verbindung. Die Haltemittel setzen sich dabei jeweils aus einer U-förmig ausgebildeten Haltefeder H1 und den freien, als Clipselemente ausgebildeten Enden derselben zugeordneten, im Basiskörper vorhandenen Rastausnehmungen 3e zusammen.

An den Basiskörper 3a sind weiterhin in dem von der Scheibe S abgewandten Bereich kegelstumpfartige Ansätze 3c angeformt, auf denen hohlzylindrische Halteelemente H2 mit ihrem einen Ende unter Preßpassung befestigt sind. An dem anderen Ende dieser Halteelemente H2 ist eine für den Anschluß und gegebenenfalls die Fixierung des Strahlensenders 1 und des Strahlenempfängers 2 vorgesehene Leiterplatte 5 z.B. über Einpreßstifte H2' befestigt.

Darüberhinaus ist der Strahlenleitkörper 3 umlaufend mit einem profilierten Fortsatz 3d versehen, der mit einem entsprechend profilierten Bereich des Gehäuseoberteils G2 in Eingriff steht. Damit wird einerseits in gewissem Maße verhindert, daß Luft in die Sensoreinrichtung eindringen kann und damit sich in der Luft befindliche Schadstoffe (Tabakqualm, Kunststoffausdünstung usw.) auf z.B. den Strahlenlinsen ablagern können. Andererseits ist dadurch auch der Eintritt von Fremdstrahlungen aus dieser Richtung vermieden. Natürlich könnte anstelle der vorgenannten Mittel auch eine entsprechend ausgebildete und angeordnete Dichtung zum Einsatz gelangen.

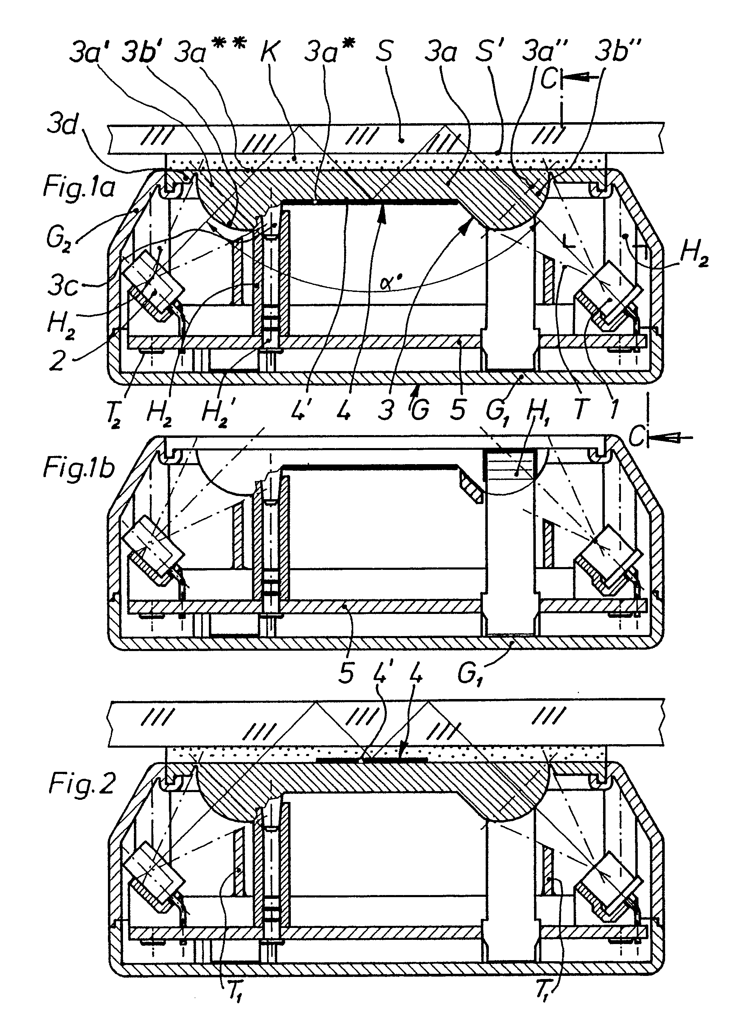

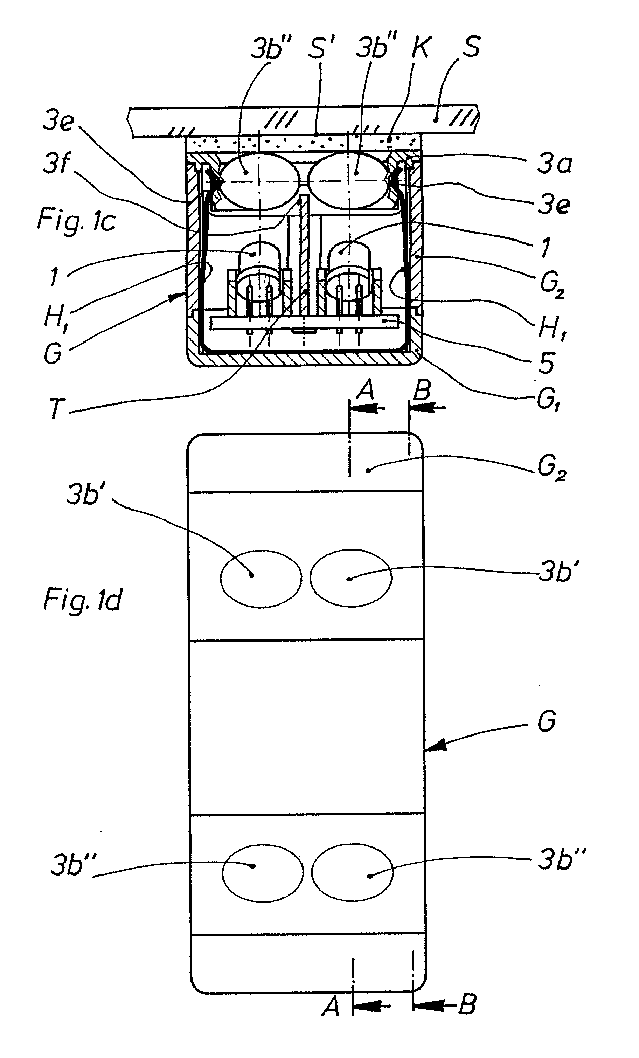

Wie insbesondere aus den Fig. 1c und 1d hervorgeht, sind mehrere (zwei) Strahlenleitkörper 3 zwecks Vergrößerung des Meßfeldes zu einer einstückigen Blockeinheit zusammengefaßt und mit einer gemeinsamen Materialschicht 4 versehen. Die optische Trennung zwischen den einzelnen, mit jeweils einem Strahlensender 1 und einen Strahlenempfänger 2 kooperierenden Strahlenleitkörpern 3 wird durch eine in eine Ausnehmung 3f des Basiskörpers 3a eingreifende, am Gehäuseoberteil G2 vorhandene Trennwand T sichergestellt.

Darüberhinaus sind im Gehäuse weitere Trennwände T1 vorhanden, die als Überstrahlschutz für nicht in den Strahlenkörper eintretende Strahlen vorgesehen sind.

Die Sensoreinrichtung arbeitet vorzugsweise auf der Basis von entweder sichtbaren Lichtstrahlen oder Infrarotstrahlen, wobei der Strahlensender als Leuchtdiode und der Strahlenempfänger als Fotodiode ausgebildet sind.

## Patentansprüche

1. Sensoreinrichtung zur Erfassung des Benetzungsgrades einer insbesondere aus Glas bestehenden transparenten Scheibe mit tropfenförmigem Niederschlag, wobei an die Scheibe zumindest ein an exponierter Stelle auf ihrer nicht dem Niederschlag ausgesetzten Oberfläche vorhandener, im wesentlichen trapezförmig ausgebildeter Strahlenleitkörper angekoppelt ist, dem in räumlicher Trennung voneinander ein Strahlensender und ein Strahlenempfänger über jeweils eine an den unter einem Winkel von 90° zueinander stehenden, gleich groß ausgeführten Trapezflächen des Basisteils des Strahlenleitkörpers angebrachte Strahlenlinse derart zugeordnet sind, daß vom Strahlensender emittierte Strahlen in Abhängigkeit von dem auf der Scheibe befindlichen Niederschlag an der Scheibe und an einem im Strahlenleitkörper zwischen den beiden Strahlenlinsen befindlichen, parallel zur Scheibe sich erstreckenden Reflexionsmittel mehrfach reflektiert und zu dem Strahlenempfänger geleitet werden, der ein der Niederschlagsmenge umgekehrt proportionales Signal liefert, **dadurch gekennzeichnet,** daß das Reflexionsmittel aus einer eine in der Größenordnung von 0,1 bis 10 $\mu$m liegende Schichtstärke aufweisenden, mit einer zur Scheibe (5) parallel verlaufenden Oberfläche (3a* oder 3a**) des Basisteils (3a) des Strahlenleitkörpers (3) in dem für die Mehrfachreflexion vorgesehenen Bereich innig verbundenen, eine Totalreflexion gewährleistenden Materialschicht (4) besteht.

2. Sensoreinrichtung nach Anspruch 1, dadurch gekennzeichnet, daß zumindest eine der beiden Oberflächen (4') der Materialschicht (4) metallisch ausgeführt und der Scheibe (S) zugewandt ist.

3. Sensoreinrichtung nach Anspruch 2, dadurch gekennzeichnet, daß die Materialschicht (4) aus einer auf einer der beiden Oberflächen (3a* oder 3a**) des Basisteils (3a) angebrachten Metallfolie besteht.

4. Sensoreinrichtung nach Anspruch 2, dadurch gekennzeichnet, daß die Materialschicht (4) aus einer auf einer der beiden Oberflächen (3a* oder 3a**) des Basisteils (3a) angebrachten metallkaschierten Kunststoffolie besteht.

5. Sensoreinrichtung nach Anspruch 2, dadurch gekennzeichnet, daß die Materialschicht (4) aus einer in Dünnschichttechnologie auf eine der beiden Oberflächen (3a* oder 3a**) des Basisteils (3a) aufgebrachten Metallschicht besteht.

6. Sensoreinrichtung nach Anspruch 2 oder einem der folgenden, dadurch gekennzeichnet, daß der metallische Anteil der Materialschicht (4) aus Reinstaluminium besteht und daß die der Scheibe (S) zugewandte Oberfläche (4') derselben hochglänzend ausgeführt ist.

7. Sensoreinrichtung nach einem der vorhergehenden Ansprüche, dadurch gekennzeichnet, daß mehreren zu einer einstückigen Blockeinheit zusammengefaßten, optisch voneinander getrennten Strahlenleitkörpern (3) eine gemeinsame Materialschicht (4) zugeordnet ist.

Fig.1a

Fig.1b

Fig.2

Fig. 1c

Fig. 1d